**Europäisches Patentamt**

**European Patent Office**

**Office européen des brevets**

(11) Veröffentlichungsnummer: **0 033 086**
**B1**

(12) # EUROPÄISCHE PATENTSCHRIFT

(45) Veröffentlichungstag der Patentschrift:
12.10.83

(51) Int. Cl.³: **B 23 B 51/00**

(21) Anmeldenummer: **81100202.1**

(22) Anmeldetag: **13.01.81**

(54) Bohrwerkzeug mit einem Wendebohrmesser.

(30) Priorität: **14.01.80 DE 3001120**

(43) Veröffentlichungstag der Anmeldung:
**05.08.81 Patentblatt 81/31**

(45) Bekanntmachung des Hinweises auf die Patenterteilung:
**12.10.83 Patentblatt 83/41**

(84) Benannte Vertragsstaaten:
**AT BE CH FR GB IT LI LU NL SE**

(56) Entgegenhaltungen:
**US-A-1 931 590**
**US-A-2 400 856**
**US-A-4 047 826**

(73) Patentinhaber: **Firma Gottlieb Gühring,**
**Jakobstrasse 10-13, D-7470 Ebingen (DE)**

(72) Erfinder: **Schröder, Karl-Heinz, Goldregenweg 3,**
**D-7483 Inzigkofen 1 (DE)**

(74) Vertreter: **Grupe, Peter, Dipl.-Ing., Patentanwaltsbüro**
**Tiedtke-Bühling-Kinne Gruppe-Pellmann-Dragotti**
**Bavariaring 4, D-8000 München 2 (DE)**

### Bohrwerkzeug mit einem Wendebohrmesser

Die Erfindung bezieht sich auf ein Bohrwerkzeug gemäss Oberbegriff des Patentanspruchs 1.

Um den wirtschaftlichen Einsatz eines Bohrwerkzeugs zu gewährleisten, muss der Werkzeugwechsel schnell durchführbar sein. Man verwendet deshalb Wendebohrmesser, die symmetrisch (punkt- oder achsensymmetrisch) aufgebaut sind, um sie bei Verschleiss einer Schneidenseite durch das Wenden wieder einsetzen zu können. Die Befestigung des Bohrmessers muss deshalb schnell lösbar und wieder herstellbar sein.

Die Kräfte, die auf das Wendebohrmesser wirken, haben im wesentlichen eine axiale Komponente — und zwar in beiden Richtungen — und eine Umfangskomponente. Diese Kräfte muss das Wendebohrmesser bei vorbestimmter Lage auf den Werkzeughalter übertragen, um nicht aus der Halterung gerissen zu werden.

Bei herkömmlichen Bohrwerkzeugen dieser Art wird das Moment der Kraft-Umfangskomponenten mittels eines axialen Schlitzes im Werkzeughalter aufgenommen, der die Breite des Wendebohrmessers hat. Die axiale Fixierung erfolgt dabei auf verschiedene Arten:

Aus der DE-OS 22 16 760 ist ein Gesteinsbohrer mit einer Befestigungseinrichtung bekannt, bei der das Wendebohrmesser mittels eines elastischen Körpers an die Anlageflächen im Grund des axialen Schlitzes gedrückt und damit in axialer Richtung gesichert und fixiert wird. Die seitliche Justierung erfolgt durch die Gestaltung der Anlageflächen im Schlitzgrund, die dem Schneidenverlauf des Wendebohrmessers angepasst sind und die dadurch das Wendebohrmesser in eine vorbestimmte Lage bringen. Der elastische Körper hat die Form eines konzentrischen Ringes und sitzt eingepasst in einer Bohrung des Wendebohrmessers, die so angeordnet ist, dass die Achse einer zu ihr parallel verlaufenden radialen Durchgangsbohrung des Werkzeughalters um ein gewisses Exzentrizitätsmass in Richtung der Anlageflächen versetzt ist. Die Vorspannung des elastischen Körpers wird dadurch erreicht, dass ein Passstift durch die radiale Durchgangsbohrung des Halters und durch die Bohrung des elastischen Körpers gesteckt wird, wodurch der elastische Körper das Wendebohrmesser über seine Bohrungsoberfläche gegen die Schneiden-Auflagefläche drückt.

Der Sitz des Wendebohrmessers ist durch das Fehlen einer Klemmeinrichtung für das Wendebohrmesser nicht fest genug und das Werkzeug ist zum Bohren nicht besonders geeignet, da im allgemeinen grosse Axialzugkräfte auftreten, wenn das Werkzeug aus der Bohrung herausgezogen wird. Die Folge davon ist, dass das Wendebohrmesser den Kontakt mit den Auflageflächen im Schlitzgrund verliert, was zur Verkantung des Wendebohrmessers und eventuell zur Zerstörung desselben oder des Werkstücks führt. Ferner muss der Stift in die radiale Bohrung geschlagen werden, was mit grossem Zeitaufwand verbunden ist und wodurch nach wiederholtem Wechsel des Wendebohrmessers mit einem Herausfallen des Stifts beim Bohren zu rechnen ist.

Aus der DE-AS 26 08 809 ist eine Ausführungsform gemäss Oberbegriff des Patentanspruchs 1 bekannt, die diesen Nachteil nur mehr in abgeschwächter Form aufweist, wobei der geschlitzte Bereich des Werkzeughalters mit Hilfe einer tiefer verlaufenden Nut elastisch ausgebildet ist, und das Wendebohrmesser mittels einer Klemmschraube, die senkrecht zur Schlitzebene angeordnet ist, durch die beiden Backen des geschlitzten Werkzeughalters geklemmt wird. Die Schraube sitzt in einer Bohrung eines Halterbackens und bewirkt eine Zugkraft auf den anderen Halterbacken über ein in diesem ausgebildetes Gewinde. Die seitliche Fixierung bzw. die mittige Positionierung des Wendebohrmessers erfolgt durch die Anlageflächen im Schlitzgrund. Die Anlage wird durch eine in einem Halterbacken vorgesehene schräg zur Halterachse verlaufende Stellschraube gewährleistet, die das Wendebohrmesser über die Innenoberfläche seiner mittigen Bohrung gegen den Schlitzgrund drückt.

Durch die Elastizität der Halterbacken und die Krafteinleitung durch die Klemmschraube ausserhalb des Wendebohrmessers besteht die Tendenz eines Aufspreizens des Schlitzes am vorderen Ende des Werkzeughalters mit der Folge, dass ein Teil der axialen Zug-Druckkraft nicht mehr kraftschlussig über die Flächen des Wendebohrmessers, sondern über die verhältnismässig schwach dimensionierte Stell- oder Madenschraube bzw. von der Schneidenfläche des Wendebohrmessers im Schlitzgrund aufgenommen wird. So kann eine sichere Klemmwirkung der Halterbacken nur in dem Bereich erzeugt werden, der in der Umgebung der Abstützflächen des Wendebohrmessers liegt. Dabei ist einmal die Gefahr einer punkt- bzw. linienförmigen Überbeanspruchung des Wendebohrmessers im Bereich der Schneiden gegeben, was die Standzeit des Werkzeugs verringert. Ein weiterer Nachteil besteht darin, dass durch die bei Klemmung bedingten Verschiebungen der Halterbacken zueinander, die Stellschraube von der Oberfläche des Wendebohrmessers abheben und dadurch ein erneutes Anziehen der Stellschraube notwendig werden kann.

In einer Weiterbildung der bekannten Klemmeinrichtung ist die Stellschraube durch ein Winkelstück ersetzt, das als Mutter für die Klemmschraube ausgebildet ist und einerseits mit einem zum Schlitz parallelen Schenkel die beiden Halterbacken zusammenpresst und mit seinem anderen senkrecht dazu angeordneten Schenkel gleichzeitig das Wendebohrmesser in den Schlitzgrund drückt und positioniert.

Auch diese Ausführungsform hat den Nachteil, dass die Klemmkraft ein Aufspreizen der Halterbacken bewirkt, und dass somit der Sitz des Wendebohrmessers trotz grosser Klemmkraft bei örtlicher Überbeanspruchung des Wendebohrmessers nicht mehr zuverlässig ist. Das Gewinde des Winkelstücks muss mit grossem Spiel gefertigt werden, wodurch es einer undefinierten Belastung ausgesetzt ist und nach wiederholter Benutzung zerstört wird, da es im unzulässigen Mass verformt wird.

Ausserdem ist es bei Haltern für Bohrwerkzeuge mit einem nicht als Wendeplatte ausgebildeten Bohrmesser schon bekannt (US-A-2400856) eine gemäss dem Oberbegriff des Anspruchs 1 ausgebildete Klemmeinrichtung zu verwenden, die im Form einer Schrauben-Mutter-Verbindung das Bohrmesser durchdringt. Die Presskraft wird dabei durch eine konusförmige Anphasung an der Mutter erzeugt, die als Glied eines Keilgetriebes auf eine Gegenfläche des Bohrmessers einwirk.

Es ist Aufgabe der Erfindung, ein Bohrwerkzeug gemäss Oberbegriff des Patentanspruchs 1 zu schaffen, das sich durch einfache und zuverlässige Handhabung sowie durch einen sicheren Sitz des Wendebohrmessers auszeichnet.

Diese Aufgabe wird durch die gekennzeichneten Merkmale des Patentanspruchs 1 gelöst.

Durch die Anordnung der Klemmeinrichtung in Form einer Schrauben-Mutter-Verbindung, die den Werkzeughalter und das Wendebohrmesser durchdringt, ist eine gleichmässige Anpresskraft über die ganze Länge des Schlitzes im Werkzeughalter gewährleistet. Die Klemmkraft wird bei Erhöhung der Klemmwirkung kleiner. Durch die Ausbildung eines Exzenters in dem Abschnitt der Klemmeinrichtung, der gegenüber dem Loch des Wendebohrmessers zu liegen kommt, ist durch einfache Drehung des Exzenters eine axiale Positionierung des Wendebohrmessers ohne mehrmaliges Nachziehen möglich. Als zusätzlicher Vorteil ergibt sich, dass die Teile der Klemmeinrichtung genau gefertigt werden können, und damit einer Abnutzung der Klemmeinrichtung weitgehend vorgebeugt wird.

Zu einer besonders günstigen Ausgestaltung gelangt man gemäss den Unteransprüchen 2 und 3. Durch die Ausbildung des Exzenters auf der Mutter wird die Schraube leicht auswechselbar. Der exzentrische Abschnitt gemäss Patentanspruch 2 kann eine beliebige, eine Exzentrizität zur Drehachse der Schraube bzw. der Mutter bewirkende Gestaltung haben. Insbesondere kann auf der Klemmeinrichtung ein Nocken ausgebildet sein, der mit einer passend ausgebildeten Innenoberfläche der Wendebohrmesserbohrung zusammenwirkt. Der Innensechskant in Schraube und Mutter ermöglicht eine sichere und einfache Bedienung der Klemmeinrichtung, wobei die Bohrleistung nicht negativ beeinflusst wird.

Die Weiterbildung der Erfindung gemäss Unteranspruch erhöht insofern die Zuverlässigkeit des Werkzeugs, als brei möglichen grossen Kräften des Exzenters die Verletzung der Schneiden des Wendebohrmessers im Kerbgrund vermieden wird.

In diesem Sinne wirkt auch der Gegenstand des Unteranspruchs 6.

Die Erfindung wird nachstehend anhand schematischer Zeichnungen an einem Ausführungsbeispiel näher erläutert. Es zeigen:

Fig. 1 eine Seitenansicht eines erfindungsgemässen Bohrwerkzeugs mit einer im Teilschnitt gezeigten Spitze mit eingebautem Wendebohrmesser,

Fig. 2 eine Seitenansicht einer erfindungsgemässen Klemmeinrichtung,

Fig. 3 eine Seitenansicht einer im vergrösserten Massstab gezeigten erfindungsgemässen Klemm-Mutter,

Fig. 4 eine Seitenansicht einer erfindungsgmässen Klemm-Schraube in einem der Fig. 3 entsprechenden Massstab,

Fig. 5 eine Seiten-Teilansicht eines erfindungsgemässen Werkzeughalters,

Fig. 6 eine Teilansicht des Werkzeughalters gemäss Fig. 5 mit Blickrichtung der Pfeile VI-VI und

Fig. 7 eine Teilansicht des Werkzeughalters gemäss Fig. 5 mit Blickrichtung der Pfeile VII-VII.

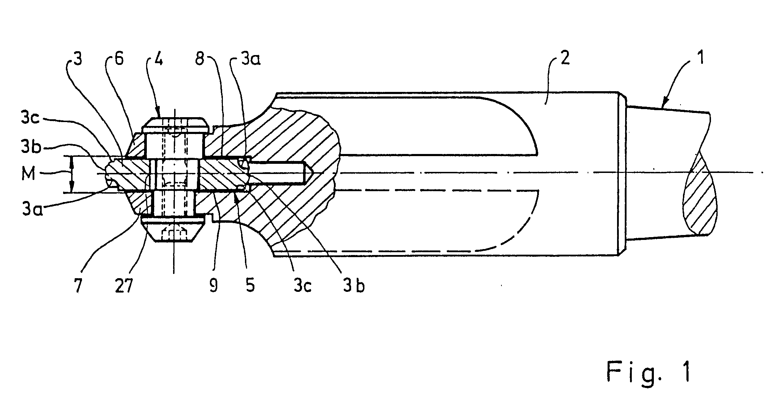

Fig. 1 zeigt ein Bohrwerkzeug 1 mit einem Halter 2 und einem Wendebohrmesser 3 in seiner Spitze. Eine Klemmeinrichtung 4 befestigt das Wendebohrmesser 3, indem sie zwei durch einem axialen Schlitz 5 gebildete Halterbacken 6 und 7 gegen das Wendebohrmesser drückt. Der Schlitz 5 ist im Bereich des Wendebohrmessers durch zwei im Abstand der Messerdicke M stehende Planflächen 8 und 9 gebildet. Das Wendebohrmesser 3 besitzt eine Schneide 3a, eine Schneidenspitze 3b und Freiflächen 3c.

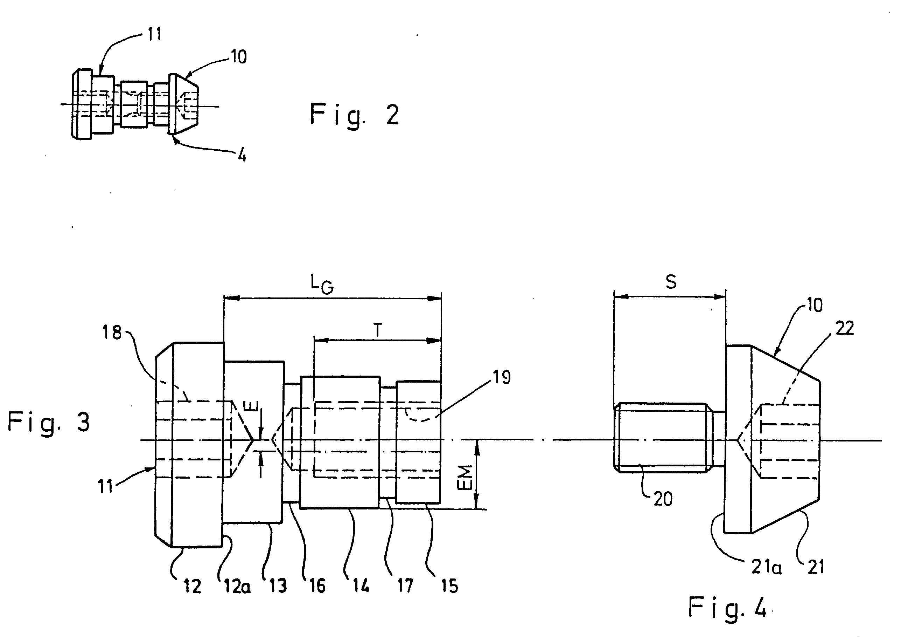

Fig. 2 zeigt die Klemmeinrichtung 4, bestehend aus einer Schraube 10 und einer Mutter 11. Die Mutter 11 ist gemäss Fig. 3 als Hutmutter ausgebildet und ist in sechs Abschnitte unterteilt: In einen Mutterkopf 12, einen abgesetzten und an den Mutterkopf anschliessenden ersten Führungsabschnitt 13, einen Exzenterabschnitt 14, einen zweiten Führungsabschnitt 15 sowie in einen ersten und einen zweiten Einstich 16 bzw. 17, der den Exzenterabschnitt 14 vom ersten bzw. zweiten Führungsabschnitt 13 bzw. 15 abtrennt. Im Bereich des Kopfes 12 besitzt die Mutter einen Innensechskant 18. Auf der dem Kopf entgegengesetzten Seite besitzt die Mutter ein Blindgewinde 19. Der Exzenterabschnitt 14 besteht aus einem um ein gewisses Exzentrizitätsmass E aus der Mittelachse A versetzten Zylinder. Die Abschnitte 12 bis 17 der Mutter haben mit steigender Bezugszahl einen kleiner werdenden Durchmesser. Die grösste Exzentrizität EM des Abschnitts 14 ist ebenfalls kleiner als der Radius des Abschnitts 13. Die Schraube 10 besitzt gemäss Fig. 4 ein passendes Gewinde 20. Der Schraubenkopf 21 besitzt ebenfalls einen Innensechskant 22.

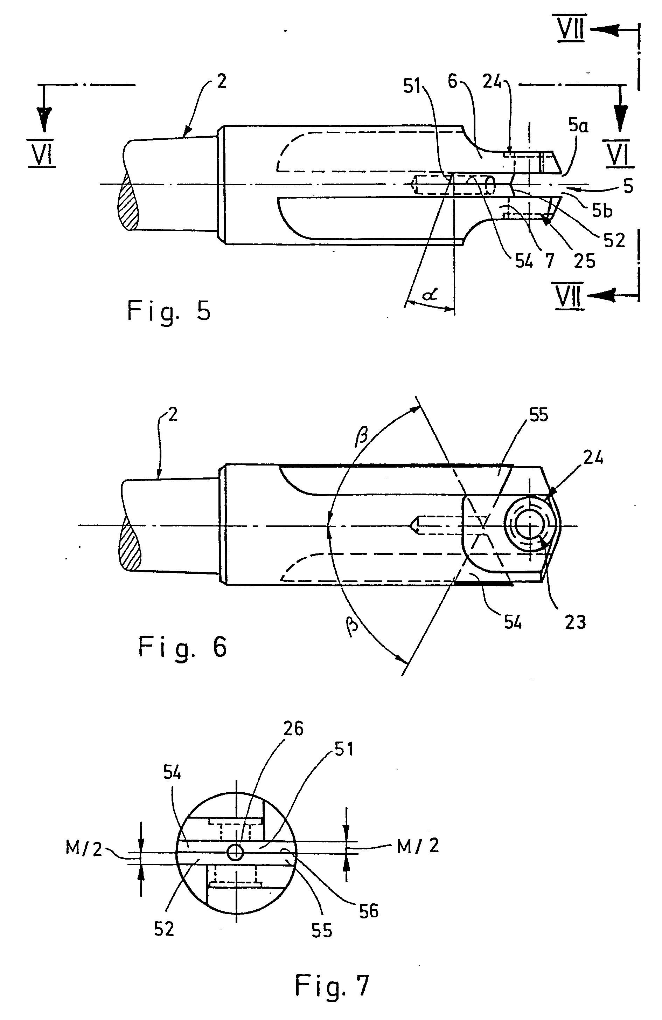

Die Fig. 5 bis 7 zeigen den Werkzeughalter 2. Die Werkzeughalterbacken 6 und 7 besitzen miteinander fluchtende Durchgangsbohrungen 23, die unterschiedlich gross ausgebildet sind. Die Durchgangsbohrungen gehen an den Aussenflächen der Halterbacken 6 und 7 in eine Senkung 24 bzw. 25 über, die als Anlageflächen der Klemmeinrichtung 4 dienen. Die Durchgangsbohrung im Halterbacken 7 hat den Durchmesser des Führungsabschnitts 13, die Durchgangsbohrung im Halterbacken 6 den Durchmesser des Führungsabschnitts 15 der Mutter 11.

Des Schlitz 5 des Werkzeughalters 2 wird durch zwei übereinander angeordnete Teilschlitze 5a und 5b gebildet, die gleiche Dicke aufweisen. Die Schlitze 5a und 5b der Dicke M/Halbe berühren sich in der Schlitz-Mittelebene 56. Der Grund des Schlitzes 5 wird durch die Ebenen 51 bzw. 52 gebildet, die gemäss Fig. 6 unter einem bestimmten Winkel zur Werkzeughalter-Achse geneigt sind. Die Neigung entspricht dem halben Spitzenwinkel des Wendebohrmessers. Die Ebenen 51 und 52 stehen auf der Schlitz-Mittelebene 56 nicht senkrecht, sondern sind um einen dem Winkel der Freiflächen des Wendebohrmessers entsprechenden Winkel geneigt. In der Ansicht gemäss Fig. 5 erscheint dieser Winkel mit der Grösse $\alpha$.

Der Schlitz 5b ist unterhalb des Schlitzes 5a ausgebildet, so dass in dem Bereich, in dem sich die beiden Teilschlitze 5a und 5b überschneiden, ein Schlitz der Breite M entsteht. Dieser Schlitz hat die gleiche Kontur, wie das Wendebohrmesser mit der Ausnahme, dass im Bereich der Hauptschneiden Hohlräume 54 und 55 der Weite M/2 ausgebildet sind. Um die Schneidenspitze 3b zu schonen, befindet sich im Werkzeughalter 2 im Schlitzgrund eine koaxiale Bohrung 26 begrenzter Tiefe, deren Durchmesser grösser ist als der Durchmesser der Abflachung der Schneidenspitze 3b.

Das Wendebohrmesser ist gemäss der beschriebenen Ausführungsform mit einer mittigen Durchgangsbohrung 27 versehen (vergleiche Fig. 1). Beim Einsetzen des Wendebohrmessers in den Schlitz 5 des Werkzeughalters 2 kommt diese in Richtung der Werkzeughalterspitze mit genau der gleichen Exzentrizität E wie der Abschnitt 14 der Mutter 11 unter bzw. über dem Durchbruch 23 zu geliegen. Der Durchmesser dieser Bohrung ist gemäss der folgenden Beziehung gewählt: $2\sqrt{EM^2+E^2} < D < 2(EM+E)$. Die Schneiden des Wendebohrmessers liegen im Schlitzgrund frei, und die Anlage an den Flächen 51 und 52 der Teilschlitze 5a und 5b erfolgt mit den Freiflächen 3c des Wendebohrmessers. Die Spitze 3b des Wendebohrmessers liegt vor dem Freiraum der Bohrung 26.

In dieser Lage des Wendebohrmessers kann die Mutter 11 in die Bohrung des Halterbackens und des Wendebohrmessers eingesetzt werden. Die Mutter liegt im eingesetzten Zustand mit ihrer Planfläche 12a des Kopfes 12 an der Planfläche der Senkung 25 des Werkzeughalters auf, wobei die Führungsabschnitte 13 und 15 der Mutter gegenüber der Innenoberflächen der Durchgangsbohrung 23 des Werkzeughalters, und der exzentrische Abschnitt 14 der Mutter innerhalb der Bohrung 27 des Wendebohrmessers zu liegen kommen. Die Höhe des Mutter-Kopfes 12 bzw. die Tiefe der Senkung 25 sind so gross gewählt, dass der gesamte Kopf im montierten Zustand innerhalb des vom Wendebohrmesser bei Drehung erzeugten Zylinders liegt. Die Länge $L_G$ ist so gewählt, dass die Mutter nicht mit dem Abschnitt 15 über die Senkungsfläche der Senkung 24 im anderen Halterbacken hinausragt.

Die Mutter lässt sich einsetzen, wenn sie so über den Halterbacken gehalten wird, dass die grösste Exzentrizität EM des Abschnitts 14 zur Halterspitze zeigt.

Bei Drehung der Mutter mittels eines für den Innensechskant 18 passenden Werkzeugs, schiebt sich der exzentrische Abschnitt 14 immer näher an die oberfläche der Bohrung des Wendebohrmessers heran und berührt diese in dem der Spitze des Werkzeughalters abgewandten Bereich. Dabei wird vom exzentrischen Abschnitt 14 eine axiale Kraft auf das Wendebohrmesser ausgeübt, das sich über die Freiflächen 3c der Schneide im Schlitzgrund an den Flächen 51 bzw. 52 abstützt.

Während des Haltens der Mutter in dieser Stellung, wird vom anderen Halterbacken die Schraube 10 in das Gewinde 19 der Mutter 11 mittels eines für den Innensechskant passenden Werkzeugs eingedreht. Die Stirnfläche 21a des Schraubenkopfes 21 stützt sich im Endzustand der Montage auf der Planfläche der Senkung 24 ab. Die Halterbacken 6 und 7 können dadurch mittels der über die Planflächen der Senkungen 24 bzw. 25 eingeleiteten Gewinde-Zugkräfte gegen die Planflächen 8 und 9 des Wendebohrmessers 3 geklemmt werden, ohne die axiale Positionierung des Wendebohrmessers zu beeinflussen.

Die Erfindung ist nicht auf die beschriebene Ausführungsform beschränkt. So kann beispielsweise die Schraube mit einem exzentrischen Abschnitt ausgebildet werden, und die Klemmkraft auf die Werkzeughalterbacken durch Drehung der Mutter erzeugt werden.

**Patentansprüche:**

1. Bohrwerkzeug mit einem Halter (2) und einem zwei sich diametral gegenüberliegende Bohrspitzen aufweisenden Wendebohrmesser (3), das in einem, den Halter in zwei Klemmbacken (6, 7) unterteilenden axialen Schlitz (5) des Halters mittels einer diametral verlaufenden Klemmeinrichtung (4) Klemmbar und das gegen den als Anlagefläche für das Wendebohrmesser ausgebildeten Grund des axialen Schlitzes pressbar ist, dadurch gekennzeichnet, dass die Klemmeinrichtung in Form einer Schrauben-Mutter-Verbindung das Wendebohrmesser (3) durchdringt und in dem innerhalb einer Bohrung des Wendebohrmessers (3) zu liegen kommenden Bereich mit einem exzentrischen Abschnitt (14) versehen ist, durch den das Wendebohrmesser (3) gegen den Grund des Schlitzes (5, 5a, 5b) pressbar ist.

2. Bohrwerkzeug nach Anspruch 1, dadurch gekennzeichnet, dass die Mutter (11) der Klemmeinrichtung (4) die Klemmbacken (6, 7) und das Wendebohrmesser (3) durchdringt und einen exzentrischen Abschnitt (14) aufweist.

3. Bohrwerkzeug nach Anspruch 2, dadurch gekennzeichnet, dass die Mutter (11) als Hutmutter mit einem Innensechskant (18) innerhalb des Mutter-Kopfs (12) und einem Blindgewinde (19) auf der dem Mutter-Kopf abgewandten Seite ausgebildet ist.

4. Bohrwerkzeug nach Anspruch 3, dadurch gekennzeichnet, dass die Schraube (10) ein zur Mutter (11) passendes Gewinde (20) besitzt, und der Schraubenkopf (21) mit einem Innensechskant (22) versehen ist.

5. Bohrwerkzeug nach Anspruch 1 bis 4, dadurch gekennzeichnet, dass der Grund des axialen Schlitzes zwei Stützflächen (51, 52) hat, die zu den beiden abzustützenden Hauptschneiden (3a) des Wendebohrmessers (3) parallel verlaufen und diese an den Freiflächen (3c) der Hauptschneiden (3a) flächig abstützen, ohne die Hauptschneiden (3a) zu berühren.

6. Bohrwerkzeug nach Anspruch 1 bis 4, dadurch gekennzeichnet, dass der Werkzeughalter (2) eine axiale mittige Blindbohrung (26) hat.

## Claims:

1. A boring tool having a holder (2) and a turnable boring cutter (3) having two boring tips disposed diametrically opposite one another, the turnable boring cutter by means of a diametrically extending clamping device (4) being capable of being clamped in an axial slit (5) of the holder which divides the holder into two clamping jaws (6, 7) and of being pressed against the bottom of the axial slit which is embodied as a contact face for the turnable boring cutter, characterized in that the clamping device, in the form of a screw-nut connection, passes through the turnable boring cutter (3) and is provided, in the area coming to rest inside a bore of the turnable boring cutter (3), with an eccentric section (14) by means of which the turnable boring cutter (3) can be pressed against the bottom of the slit (5, 5a, 5b).

2. A boring tool as defined by claim 1, characterized in that the nut (11) of the clamping device (4) passes through the clamping jaws (6, 7) and the turnable boring cutter (3) and has an eccentric section (14).

3. A boring tool as defined by claim 2, characterized in that the nut (11) is embodied as a cap nut having a hexagonal recess (18) inside the nut cap (12) and a blind thread (19) on the side remote from the nut cap.

4. A boring tool as defined by claim 3, characterized in that the screw (10) has a thread (20) matching the nut (11), and the screw cap (21) is provided with a hexagonal recess (22).

5. A boring tool as defined by claims 1 to 4, characterized in that the bottom of the axial slit has two support faces (51, 52) which extend parallel to the two main cutting edges (3a) of the turnable boring cutter (3) which are to be supported and which support these cutting edges in planar fashion on the flanks (3c) of the main cutting edges (3a), without touching the main cutting edges (3a).

6. A boring tool as defined by claims 1 to 4, characterized in that the tool holder (2) has an axial, central blind bore (26).

## Revendications:

1. Outil de perçage comprenant un porte-outil (2) et une mèche de perçage réversible (3), comportant deux pointes d'alésage diamétralement opposées, qui peut être serrée au moyen d'un dispositif de serrage (4) orienté diamétralement dans une fente axiale (5) qui subdivise le porte-outil (2) en deux mors de serrage (6, 7) et qui peut être pressée contre le fond de la fente axiale constituée sous la forme d'une surface d'appui pour la mèche de perçage réversible (3), caractérisé en ce que le dispositif de serrage qui se présente sous la forme d'une liaison à vis et à écrou traverse la mèche de perçage réversible (3) et est muni d'une section excentrique (14) dans la région venant en appui à l'intérieur d'un alésage de la mèche reversible (3), et par laquelle ladite mèche réversible (3) peut être pressée contre le fond de la fente (5, 5a, 5b).

2. Outil de perçage selon la revendication 1, caractérisé en ce que l'écrou (11) du dispositif de serrage (4) traverse les mors de serrage (6, 7) et la mèche de perçage réversible (3) et comprend une section excentrique (14).

3. Outil de perçage selon la revendication 2, caractérisé en ce que l'écrou (11) est constitué sous la forme d'un écrou borgne comprenant un six-pans interne (18) à l'intérieur de la tête (12) de l'écrou et un filetage aveugle (19) sur le côté qui est à l'opposé de la tête de l'écrou.

4. Outil de perçage selon la revendication 3, caractérisé en ce que la vis (10) comprend un filetage (20) adapté à l'écrou (11), et en ce que la tête (21) de la vis est munie d'un six-pans interne (22).

5. Outil de perçage selon l'une quelconque des revendications 1 à 4, caractérisé en ce que le fond de la fente axiale présente deux surfaces d'appui (51, 52) qui sont parallèles aux deux tranchants principaux (3a) de la mèche de perçage réversible (3) qui doivent être supportés et qui supportent ces derniers à plat sur les surfaces libres (3c) des tranchants principaux (3a) sans toucher lesdits tranchants principaux (3a).

6. Outil de perçage selon l'une quelconque des revendications 1 à 4, caractérisé en ce que le porte-outil (2) présente un alésage borgne central et axial (26).

Fig. 1

6

F i g. 2

11

10

4

F i g. 3

$L_G$

T

18

E

19

11

EM

12  12a  13  16  14  17  15

S

10

22

20

21a  21

F i g. 4

Fig. 5

Fig. 6

Fig. 7